# EUROPEAN PATENT APPLICATION

(11) **EP 1 361 491 A1**
(43) Date of publication of application: **12.11.2003**
(21) Application number: 03076371.8
(22) Date of filing: 05.05.2003
(51) Int. Cl.: G05D 16/20

(54) **Device for regulating the pressure and/or the flow rate of a gas flow**

(30) Priority: 07.05.2002 BE 200200303
(71) Applicant: Decap Tony, besloten vennootschap met beperkte aansprakelijkheid, 2200 Herentals (BE)
(72) Inventor: Decap, Tony, B-2200 Herentals (BE)
(74) Representative: Donné, Eddy

(57) **Abstract**

Device for regulating the pressure and/or the flow rate of a gas flow through a duct (1), whereby this device is provided in said duct (1) and whereby it comprises means (5) to entirely or partially shut of said duct (1) by means of a control unit (6), characterised in that a cross wall (8) is provided in the duct (1) having one or several passages (10) for the gas flow, and in that the aforesaid means (5) comprise a flexible element (11) which is fixed to the above-mentioned cross wall (8) on the one hand and is provided at least partially over the passages (10), and which is coupled to a voice coil (16) on the other hand which mainly consists of a magnet (17) and a coil (19) working in conjunction with it, which is connected to the outlet of the above-mentioned control unit (6), and whereby the part (17-19) of the voice coil (16) which is coupled to the flexible element (11) is moveable.

## Description

The present invention concerns a device for regulating the pressure and/or the flow rate of a gas flow.

In particular, the invention aims to regulate the pressure and/or the flow rate of a gas flow whereby a relatively large flow rate is combined with a relatively low pressure, as is for example customary in units which supply air to organ pipes, automatic accordions or the like.

In an enhanced embodiment, however, the invention can also be applied for the regulation of relatively high pressures, such as in compressed air circuits and the like.

It is known to use devices to this end which are provided in the duct of the gas flow and whereby means are used which make it possible to entirely or partially shut off the gas flow duct by means of a control unit.

These known devices are disadvantageous in that they are rather cumbersome and expensive, and in particular in that they react very slowly to fluctuations in the gas flow or in the case of varying adjustments of the required pressure levels or flow rates via the above-mentioned control unit, as a result of which only slow variations in the pressure levels and/or the flow rates are possible.

The present invention aims to remedy the above-mentioned and other disadvantages by providing a device which is simple and low-priced and which moreover allows for fast changing pressure levels and/or flow rates.

To this end, the invention aims a device for regulating the pressure and/or the flow rate of a gas flow through a duct, whereby this device is provided in said duct and whereby it comprises means to entirely or partially shut of said duct by means of a control unit, characterised in that a cross wall is provided in the duct having one or several passages for the gas flow, and in that the provided means comprise a flexible element which is fixed to the above-mentioned cross wall on the one hand and is provided at least partially over the passages, and which is coupled to a voice coil on the other hand which mainly consists of a magnet and a coil working in conjunction with it, which is connected to the outlet of the above-mentioned control unit, and whereby the part of the voice coil which is coupled to the flexible element is moveable.

Thus is obtained a device which makes it possible to regulate the pressure and/or the flow rate of the gas flow in a simple manner by changing the electric signal of the control unit to the voice coil. Thus, the axial position of the moveable part of the voice coil is changed, as a result of which also the position of the flexible element is changed and the passages in the cross wall are shut off to a greater or lesser extent, so that the gas flow is slowed down more or less, and so that, as a consequence, other pressure levels and/or flow rates are obtained.

Such a device according to the invention offers the advantage that it can be realised in a very simple manner with parts that are relatively low-priced and moreover are easy to manufacture or are readily available on the market.

The voice coil is preferably of the type which consists of a fixed magnet and a moveable coil, and the flexible element is made ring-shaped and coupled to said moveable coil by means of a conical connecting element made of a relatively rigid and light material, such as reinforced cardboard, synthetic material, perforated metal foil or the like. The aforesaid coil and the connecting element can be made very light in this manner, which offers the advantage that the device can react very fast, since the inertia of these moving parts is very small, as a result of which they can be moved very fast in order to obtain swift variations in the pressure and/or the flow rate.

Hence, such a device according to the invention is very suitable to control for example an organ pipe, since it becomes possible with such a device to produce a controllable and adjustable vibrato sound with the organ pipe in a very simple manner, as opposed to with the devices known until now, by making the air flow in the organ pipe vary very quickly, up and down in relation to an average value.

In order to better explain the characteristics of the invention, the following preferred embodiment of a device according to the invention is described as an example only without being limitative in any way, with reference to the accompanying drawings, in which:
figure 1 schematically represents a device according to the invention;
figures 2 and 3 represent the device from figure 1, but for two other positions;
figures 3, 4 and 5 represent sections to a larger scale, according to lines III-III, IV-IV and V-V respectively in figure 3.

The figures represent a duct 1 for a gas flow, whereby this duct 1 is formed of an inlet 2, an outlet 3 and a broadened central part 4 in which is provided a device according to the invention for regulating the pressure and/or the flow rate of the gas flow at the outlet 3 of the duct 1.

The above-mentioned device according to the invention mainly consists of means 5 which make it possible to partly or entirely shut off the duct 1, and of a control unit 6 with a control element 7 to adjust said means.

The above-mentioned means 5 comprise a cross wall 8 fixed on the inner wall of said duct 1 by means of bolts or the like, whereby passages 10 for the gas flow are provided in this cross wall 8.

It is clear that, according to a variant, such a cross wall 8 with passages 10 can also be part of the duct 1 itself.

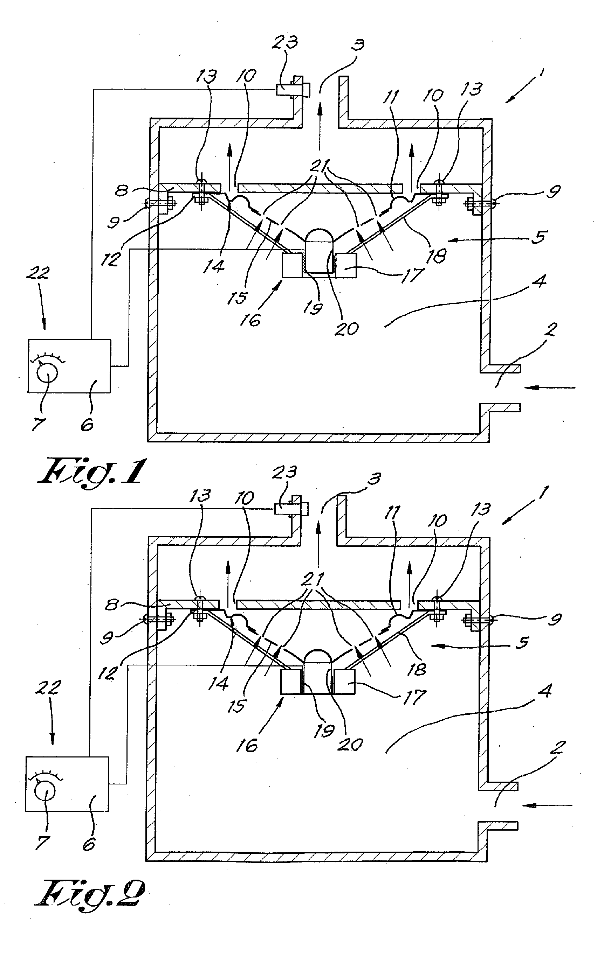

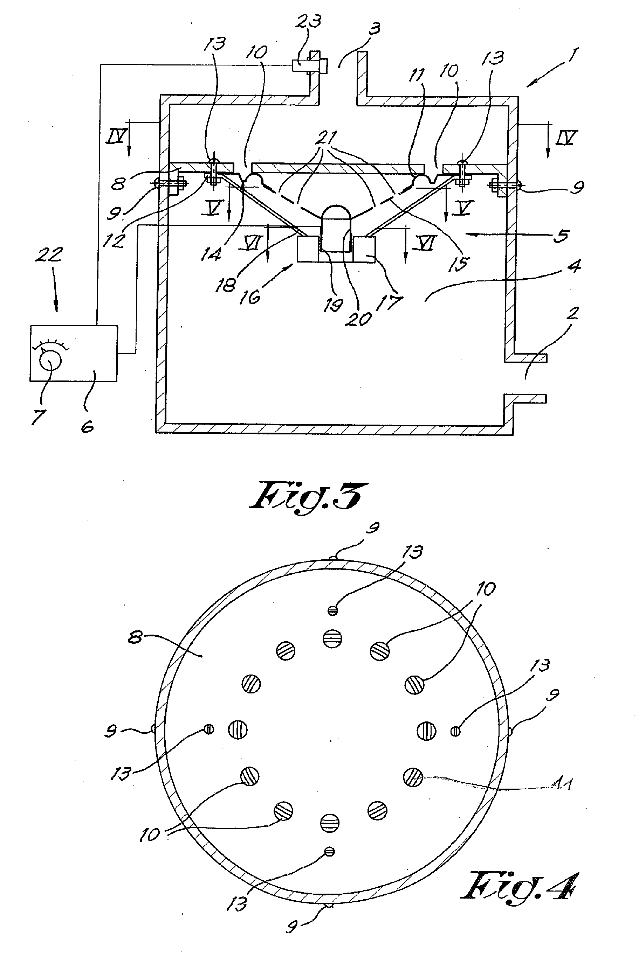

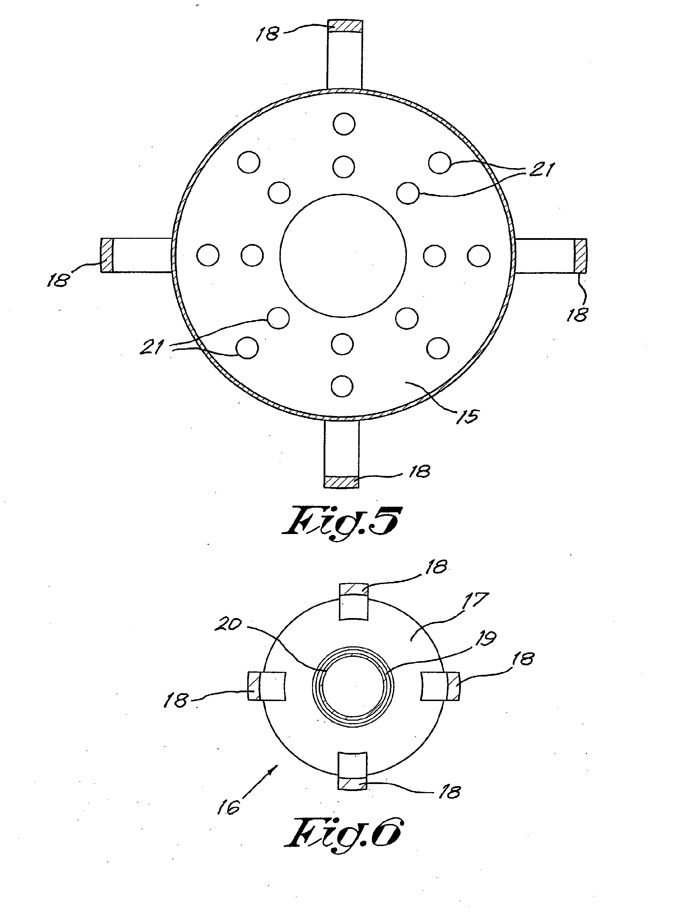

The means 5 also comprise a flexible ring-shaped element 11 which is made for example of rubber, synthetic material, reinforced cardboard, flexible metal foil or the like, and which is clamped with its outer edge between the above-mentioned cross wall 8 and a supporting ring 12 which is fixed to the cross wall 8 for example by means of bolts 13, and whereby this flexible element 11 is provided over the passages 10 and has such dimensions that it can shut off the above-mentioned passages 10 entirely, as represented in figure 3.

The flexible element 11 is made such that, seen in a cross section, it has a U-shaped or V-shaped bent part 14, such that the flexible element can be stretched in the radial direction without much effort by pulling open the legs of said U-shaped or V-shaped part.

The ring-shaped flexible element 11 is connected to a voice coil 16 which is also part of the device according to the invention by means of a connecting element 15.

The voice coil 16 in this case consists of a fixed ring-shaped magnet 17 on the one hand, for example a permanent magnet, which is fixed to the above-mentioned supporting ring 12 by means of supports 18, and of a coil 19 on the other hand, wound around a cylindrical case 20, which coaxially extends in the ring-shaped magnet 17 and which can be axially moved in a direction which is diagonal to the above-mentioned cross wall 8.

The connecting element 15 is preferably made of a relatively light and rigid material, such as reinforced cardboard, synthetic material, metal foil or the like, and in this case it is conical and provided with perforations 21. The connecting element 15 is fixed with its outer edge to the flexible element 11, for example by means of gluing or the like, and it is fixed with its inner edge to the edge of the case 20 turned towards the cross wall 8 by means of gluing, stapling or the like.

It is clear that the connecting element 15 can be made in different ways, for example by means of laths or the like which are fixed between the flexible element 11 and the voice coil 16, or it can also be made in one piece with the flexible element 11 out of rubber, reinforced cardboard or the like.

The above-mentioned control unit 6 is part of a measuring and control circuit 22, for example in the form of a generally known PID (Proportional - Integral-Differential) control circuit, whereby the outlet of this control unit 6 is electrically connected to the coil 19 of the voice coil 16, and whereby the inlet of the control unit 6 is coupled to a sensor 23 provided on the outlet 3 of the duct 1 in the gas flow, and which makes it possible, depending on the required adjustment, to measure the pressure or the flow rate of the gas flow.

The use of the device according to the invention is as follows.

In order to regulate the pressure of a gas flow through the duct 1 whose inlet 2 is connected to a compressor, a fan or the like, or whose outlet 3 is coupled to a gas exhaust system or the like, the control unit 6 is first adjusted to a specific required pressure by means of the control element 7.

As long as the measuring and control circuit 22 is not activated, the coil 19 and the flexible element 11, as represented in figure 1, will assume a neutral position in which the passages 10 are shut off only partially by the flexible element 11. The gas will flow to the outlet 3 through the perforations 21 and the passages 10, whereby a certain pressure and a certain flow rate will be obtained at the outlet 3, depending on the pressure and the flow rate provided by the compressor, fan, exhaust system or the like.

As soon as the measuring and control circuit 22 is switched on, when the pressure value as measured by the sensor 23 is for example smaller than the set pressure value, the coil 19 will receive a voltage from the control unit 6, as a result of which said coil 19, as represented in figure 2, will assume another position in the known manner in relation to the magnet 17. As a result, the flexible element 11 will shut off the passages 10 to a lesser degree, and thus the gas flow through these passages 10 will be slowed down less, so that the pressure and the flow rate on the outlet 3 will increase until the measured pressure value is equal to the set pressure value.

It is clear that, in the same manner, the device can also be used for regulating the flow rate of the gas flow by making use of a sensor 23 which measures the flow rate instead of the pressure.

Figure 3 represents a situation in which the set flow rate is zero, and consequently the flexible element 11 shuts off the passages 10 entirely.

It is for example also possible for the measuring and control circuit 22, instead of the pressure or the flow rate having to be adjusted manually, to be controlled by an external variable control signal coming for example from a PC, a signal generator or the like.

The major advantage of the device according to the invention is that it reacts very fast and accurately to varying control signals, so that it becomes possible to realise very fast changing pressure levels and/or flow rates which follow the changes in the control signals very precisely, even in case of very high changing frequencies of said signals.

It is clear that, although in the given example the flexible element is made ring-shaped, other shapes are not excluded either, such as for example a rectangular flexible element provided over the passages 10 which is fixed with one edge part to the cross wall 8 and which is coupled with another edge part to the voice coil 16.

For certain applications, it may also be sufficient if the flexible element 11 is provided only partially over the passages 10, whereby the possibilities for adjustment are of course more restricted in this case.

It is also clear that the voice coil 16 can also be of the type formed of a fixed ring-shaped coil provided around a moveable magnetic core, and whereby said magnetic core is in that case fixed to the connecting element 15.

It goes without saying that, with a device according to the invention, also the pressure and/or the flow rate at the inlet 2 of the duct 1, or in any other place whatsoever in the duct 1, can be adjusted by providing the sensor 23 at said place in the duct 1 in the gas flow.

Although, in the given example, the means 5 are provided on the upstream side of the cross wall 8, it goes without saying that these means 5 can also be fixed on the downstream side of said cross wall 8 with the same possibilities and advantages.

The present invention is by no means limited to the above-described embodiment given as an example and represented in the accompanying drawings; on the contrary, such a device according to the invention can be made in all sorts of shapes and dimensions while still remaining within the scope of the invention.

## Claims

1. Device for regulating the pressure and/or the flow rate of a gas flow through a duct (1), whereby this device is provided in said duct (1) and whereby it comprises means (5) to entirely or partially shut of said duct (1) by means of a control unit (6), **characterised in that** a cross wall (8) is provided in the duct (1) having one or several passages (10) for the gas flow, and **in that** the aforesaid means (5) comprise a flexible element (11) which is fixed to the above-mentioned cross wall (8) on the one hand and is provided at least partially over the passages (10), and which is coupled to a voice coil (16) on the other hand which mainly consists of a magnet (17) and a coil (19) working in conjunction with it, which is connected to the outlet of the above-mentioned control unit (6), and whereby the part (17-19) of the voice coil (16) which is coupled to the flexible element (11) is moveable.

2. Device according to claim 1, **characterised in that** the flexible element (11) is made ring-shaped and **in that** this flexible element (11) is fixed with its outer edge to the cross wall (8) and is coupled with its inner edge to the above-mentioned voice coil (16).

3. Device according to claim 1 or 2, **characterised in that** the flexible element (11) is made of rubber.

4. Device according to any of the preceding claims, **characterised in that** the flexible element (11), seen in a cross section, has a U-shaped or V-shaped bent part (14).

5. Device according to any of the preceding claims, **characterised in that** the flexible element (11) is connected to the above-mentioned voice coil (16) by means of a conical connecting element (15) which is provided with perforations (21) to let the gas flow through.

6. Device according to claim 5, **characterised in that** the connecting element (15) is made of a reinforced cardboard.

7. Device according to any of the preceding claims, **characterised in that** the above-mentioned magnet (17) of the voice coil (16) is fixed, and **in that** the coil (19) of the voice coil (16) working in conjunction with it is moveable, and **in that** this coil (19) is coupled to the flexible element (11).

8. Device according to any of the preceding claims, **characterised in that** the control unit (6) is part of a measuring and control circuit (22) comprising a sensor (23) for measuring the pressure or the flow rate of the gas flow, whereby this sensor (23) is coupled to the inlet of the control unit (6).

9. Device according to claim 8, **characterised in that** the above-mentioned measuring and control circuit (22) is a PID regulator.
